(19) Europäisches Patentamt / European Patent Office / Office européen des brevets

(11) **EP 4 246 112 B1**

(12) **EUROPEAN PATENT SPECIFICATION**

(45) Date of publication and mention
of the grant of the patent:
**26.03.2025 Bulletin 2025/13**

(21) Application number: **21891720.1**

(22) Date of filing: **02.11.2021**

(51) International Patent Classification (IPC):
***B60C 23/06*** (2006.01)    ***G01B 21/32*** (2006.01)
***G01L 1/04*** (2006.01)    ***G01M 17/02*** (2006.01)
***B60C 19/00*** (2006.01)

(52) Cooperative Patent Classification (CPC):
**G01M 17/02; B60C 19/00; B60C 23/064;**
**G01B 21/32; G01L 1/04;** B60C 2019/004

(86) International application number:
**PCT/JP2021/040419**

(87) International publication number:
**WO 2022/102473 (19.05.2022 Gazette 2022/20)**

(54) **TIRE LOAD PREDICTION SYSTEM, TIRE LOAD PREDICTION PROGRAM, AND TIRE LOAD PREDICTION METHOD**

REIFENLASTVORHERSAGESYSTEM, REIFENLASTVORHERSAGEPROGRAMM UND REIFENLASTVORHERSAGEVERFAHREN

SYSTÈME DE PRÉDICTION DE CHARGE DE PNEU, PROGRAMME DE PRÉDICTION DE CHARGE DE PNEU, ET PROCÉDÉ DE PRÉDICTION DE CHARGE DE PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.11.2020 JP 2020187996**

(43) Date of publication of application:
**20.09.2023 Bulletin 2023/38**

(73) Proprietor: **BRIDGESTONE CORPORATION**
**Chuo-ku**
**Tokyo 104-8340 (JP)**

(72) Inventor: **NISHIYAMA, Kenta**
**Tokyo 104-8340 (JP)**

(74) Representative: **Marks & Clerk LLP**
**15 Fetter Lane**
**London EC4A 1BW (GB)**

(56) References cited:
JP-A- 2008 542 735    US-A1- 2003 058 118
US-A1- 2007 240 501    US-A1- 2008 294 352
US-A1- 2010 063 671    US-A1- 2013 338 942
US-A1- 2014 005 956

**Description**

**TECHNICAL FIELD**

The present invention relates to a tire load prediction system, a tire load prediction program, and a tire load prediction method which predict a load of a pneumatic tire.

**BACKGROUND ART**

In the past, a technique has been proposed in which the contact time ratio (CTR; parameter indicating ground contact length) of a tire is calculated using a time-series waveform of an acceleration sensor arranged inside a pneumatic tire (hereinafter referred to as a tire), to estimate the load of the tire on the basis of the contact time ratio (Patent Literature 1). Tire load estimation based on tangential strain has also been proposed (Patent Literature 2).

**CITATION LIST**

**PATENT LITERATURE**

Patent literature 1: EP3428597 A1.

Patent literature 2: US2010/063671 A1.

**SUMMARY OF THE INVENTION**

Incidentally, in the conventional technology, there has been an inconvenience in that load prediction errors are large because the ground contact length of a tire varies depending on the wear condition of the tire.
Furthermore, acceleration sensors also have the disadvantage that the centrifugal force is small in the low-speed range, and it is therefore difficult to make a prediction with vehicles that mainly travel at low speeds.
Thus, the present invention has been made in view of the above problems, and an object thereof is to provide a tire load prediction system, a tire load prediction program, and a tire load prediction method which can increase the accuracy of load prediction and can perform load prediction even for vehicles that mainly travel at low speeds.
A tire load prediction system according to an aspect of the present invention includes: a sensor unit that is provided inside a tire and has a strain sensor that detects strain of the tire; a strain data acquisition unit that acquires strain data in a tire tangential direction that is output from the sensor unit; a linear transformation unit that performs a linear transformation on the acquired strain data; a first estimation unit that estimates a velocity and angular velocity in the tire tangential direction on the basis of a transformation result produced by the linear transformation unit; a second estimation unit that estimates a velocity in a tire radial direction from estimated values for the velocity and angular velocity in the tire tangential direction; a third estimation unit that estimates a velocity in a $\theta$-angle direction corresponding to an angle of the strain sensor with respect to a ground contact surface of the tire, from estimated values for an acceleration and angular velocity in the tire tangential direction; a fourth estimation unit that estimates deflection of the tire on the basis of the velocity and angular velocity in the tire tangential direction, the velocity in the tire radial direction, and the velocity in the $\theta$-angle direction; and a load prediction unit that predicts a load applied to the tire on the basis of the estimated deflection of the tire.
According to such a configuration, it is possible to increase the accuracy of load prediction.
Furthermore, it is possible for the fourth estimation unit to estimate a deformation profile of the tire on the basis of the velocity in the tire tangential direction, the velocity in the tire radial direction, and the velocity in the $\theta$-angle direction, and extract a feature value corresponding to the deflection of the tire to estimate the deflection of the tire.
It is thereby possible to further increase the accuracy of load prediction.
Furthermore, it is possible for the linear transformation unit to perform a linear transformation on the strain data using the following formula.

[Equation 1]

$$\omega(t) = \omega_0 \left( a_1 \varepsilon(t) + 1 \right)$$

Wherein, $\omega_0$: average angular velocity, $a_1$: angular velocity multiplying factor, $\varepsilon$: strain
It is thereby possible to realize load prediction with increased accuracy.

Furthermore, it is possible for the first estimation unit to estimate tangential-direction velocity by performing a linear transformation for the acquired data using the following formula.

$$[\text{Equation 3}]$$

$$v_T(t) = v_{T0}(a_2\,\varepsilon(t)+1)$$

Wherein, $v_{T0}$: average tangential-direction velocity, $a_2$: tangential-direction velocity multiplying factor
It is thereby possible to realize load prediction with increased accuracy.

A tire load prediction program according to another aspect of the present invention is executed by a CPU provided in a tire load prediction system, the program including: a strain data acquisition step of acquiring strain data in a tire tangential direction that is output from a strain sensor provided on an inner side surface of a tire or inside the tire; a linear transformation step of performing a linear transformation on the acquired strain data; a first estimation step of estimating a velocity and angular velocity in the tire tangential direction on the basis of a transformation result; a second estimation step of estimating a velocity in a tire radial direction on the basis of estimated values for the velocity and angular velocity in the tire tangential direction; a third estimation step of estimating a velocity in a $\theta$-angle direction corresponding to an angle of the strain sensor with respect to a ground contact surface of the tire, on the basis of estimated values for an acceleration and angular velocity in the tire tangential direction; a fourth estimation step of estimating deflection of the tire on the basis of the velocity and angular velocity in the tire tangential direction, the velocity in the tire radial direction, and the velocity in the $\theta$-angle direction; and a load prediction step of predicting a load applied to the tire on the basis of the estimated deflection of the tire.

It is thereby possible to increase the accuracy of load prediction.

Furthermore, in the fourth estimation step, it is possible to estimate a deformation profile of the tire on the basis of the velocity in the tire tangential direction, the velocity in the tire radial direction, and the velocity in the $\theta$-angle direction, and extract a feature value corresponding to the deflection of the tire to estimate the deflection of the tire.

It is thereby possible to further increase the accuracy of load prediction.

A tire load prediction method of another aspect of the present invention includes: a strain data acquisition process of acquiring strain data in a tire tangential direction that is output from a strain sensor provided on an inner side surface of a tire or inside the tire; a linear transformation process of performing a linear transformation on the acquired strain data; a first estimation process of estimating a velocity and angular velocity in the tire tangential direction on the basis of a transformation result; a second estimation process of estimating a velocity in a tire radial direction on the basis of estimated values for the velocity and angular velocity in the tire tangential direction; a third estimation process of estimating a velocity in a $\theta$-angle direction corresponding to an angle of the strain sensor with respect to a ground contact surface of the tire, on the basis of estimated values for an acceleration and angular velocity in the tire tangential direction; a fourth estimation process of estimating deflection of the tire on the basis of the velocity and angular velocity in the tire tangential direction, the velocity in the tire radial direction, and the velocity in the $\theta$-angle direction; and a load prediction process of predicting a load applied to the tire on the basis of the estimated deflection of the tire.

It is thereby possible to increase the accuracy of load prediction.

Furthermore, in the fourth estimation process, it is possible to estimate a deformation profile of the tire on the basis of the velocity in the tire tangential direction, the velocity in the tire radial direction, and the velocity in the $\theta$-angle direction, and extract a feature value corresponding to the deflection of the tire to estimate the deflection of the tire.

It is thereby possible to further increase the accuracy of load prediction.

According to the present embodiment, it is possible to provide a tire load prediction system, a tire load prediction program, and a tire load prediction method which can increase the accuracy of load prediction and can perform load prediction even for vehicles that mainly travel at low speeds.

## BRIEF DESCRIPTION OF THE DRAWINGS

[FIG. 1] FIG. 1 is a schematic configuration diagram illustrating a schematic configuration of a tire load prediction system according to an embodiment.

[FIG. 2] FIG. 2 is a functional block diagram illustrating a functional configuration of the tire load prediction system according to the embodiment.

[FIG. 3] FIG. 3 consists of explanatory diagrams (a) to (d) illustrating a definition of a coordinate system used to explain the tire load prediction system according to the embodiment.

[FIG. 4] FIG. 4 is a flow chart illustrating a processing procedure for tire load prediction processing executed in the tire load prediction system according to the embodiment.

[FIG. 5] FIG. 5 is a graph illustrating a relation between tangential strain and time.

[FIG. 6] FIG. 6 is a graph illustrating a relation between angular velocity and time.

[FIG. 7] FIG. 7 is a graph illustrating a relation between tangential velocity and time.

[FIG. 8] FIG. 8 consists of explanatory diagrams (a) to (c) used to explain a principle of estimating tangential-direction velocity.

[FIG. 9] FIG. 9 is a graph illustrating a relation between a sensor angle and time.

[FIG. 10] FIG. 10 is a graph illustrating a relation between X-coordinate velocity and time.

[FIG. 11] FIG. 11 is a graph illustrating a relation between Z-coordinate velocity and time.

[FIG. 12] FIG. 12 is a graph illustrating a relation between X-coordinate displacement and time.

[FIG. 13] FIG. 13 is a graph illustrating a relation between Z-coordinate displacement and time.

[FIG. 14] FIG. 14 is a graph illustrating a tire deflection estimation situation.

[FIG. 15] FIG. 15 is a graph illustrating a relation between a deflection rate estimation and load of a tire.

## DESCRIPTION OF EMBODIMENTS

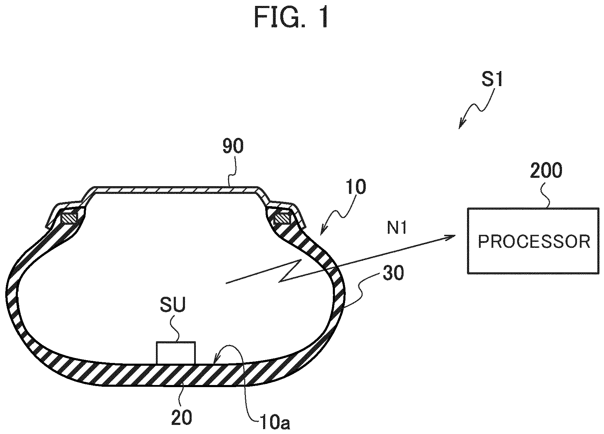

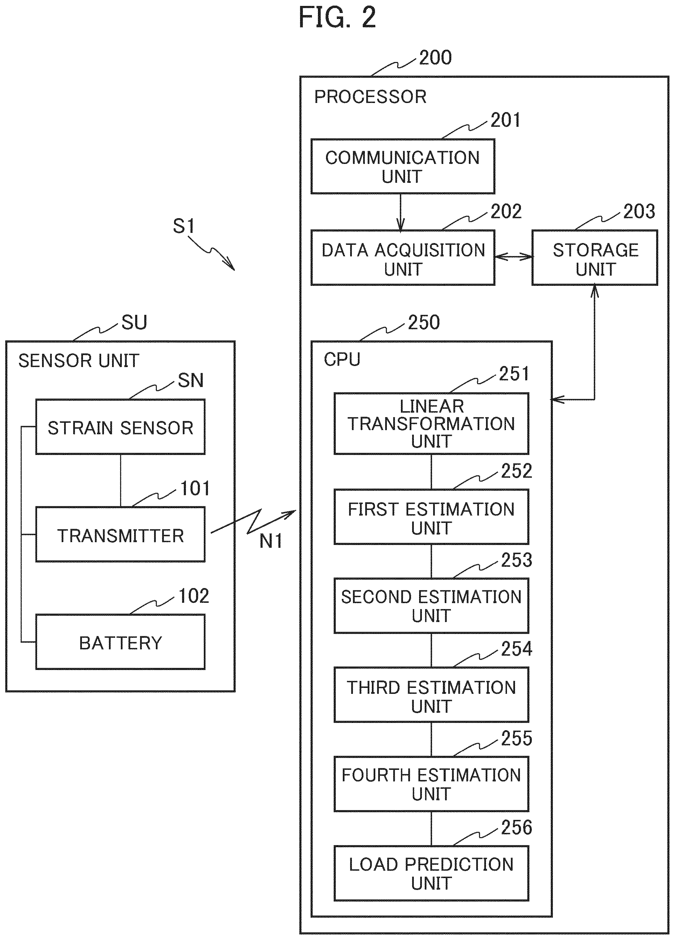

A tire load prediction system S1 according to an embodiment of the present invention will be described with reference to FIGS. 1 and 2.

Note that the same or similar portions are denoted by the same or similar reference numerals in the following descriptions of the drawings. However, it should be noted that the drawings are schematic and ratios of dimensions and the like are different from the actual ones.

Accordingly, specific dimensions and the like should be determined in consideration of the following descriptions. Furthermore, the drawings include portions having dimensional relations and ratios that are different from each other, as a matter of course.

(Schematic configuration of tire load prediction system)

A schematic configuration of the tire load prediction system S1 according to the embodiment will be described with reference to the schematic configuration diagram of FIG. 1.

Here, the tire load prediction system S1 according to the present embodiment uses a strain sensor SN instead of a conventional acceleration sensor, and follows an algorithm (the details of which are described later) to estimate the profile and deflection of a tire from single-axis (circumferential) data of the strain sensor SN and predict the load.

The tire load prediction system S1 includes a sensor unit SU provided on a pneumatic tire (hereafter referred to simply as a tire) 10 side, and a processor 200 (in-vehicle device (ECU) or the like) that processes information acquired from the sensor unit SU via a wireless line N1.

FIG. 1 illustrates a cross-sectional shape along a tire width direction of a tire 10 mounted on a rim wheel 90.

Furthermore, a tread portion 20 is a portion where the tire 10 attached to a vehicle (not illustrated) comes into contact with a road surface when rolling on the road surface. A tread pattern corresponding to the type of vehicle and the required performance is formed in the tread portion 20.

The sensor unit SU provided with the single-axis strain sensor SN for detecting the strain of the tire 10 is provided on an inner surface 10a of the tire 10 to which the tire load prediction system S1 can be applied.

Although not directly related to the present embodiment, note that the sensor unit SU may be capable of acquiring temperature information and the like in addition to the strain.

In the configuration example illustrated in FIG. 1, the sensor unit SU is provided on the inner surface 10a facing the tread portion 20. More specifically, the sensor unit SU is attached to the surface of an inner liner (not illustrated) that prevents leakage of gases such as air filled in the internal space of the pneumatic tire 10 mounted on the rim wheel 90.

The sensor unit SU is preferably provided on each tire 10 attached to the vehicle. This is because it is desirable to monitor the load or the like of each tire 10 so as to ensure the safety of the vehicle.

In addition, the sensor unit SU need not necessarily be attached to the inner side surface of the tire 10. For example, a part or all of the sensor unit SU may be embedded inside the tire 10.

(Functional configuration of tire load prediction system)

As illustrated in the functional block diagram of FIG. 2, the sensor unit SU includes the single-axis strain sensor SN which detects strain of the tire 10, a transmitter 101 which transmits detection data to the processor 200, and a battery 102 which feeds the strain sensor SN and the transmitter 101.

Meanwhile, the processor 200 is provided with a strain data acquisition unit 202 that acquires, via a communication unit 201, strain data in a tire tangential direction that is output from the sensor unit SU.

Furthermore, the processor 200 is provided with a storage unit 203 configured of a nonvolatile memory or the like for storing acquired strain data.

Furthermore, the processor 200 is provided with a linear transformation unit 251 configured of a CPU 250 or the like for performing a linear transformation on acquired strain data.

In addition, the processor 200 is provided with a first estimation unit 252 that estimates a velocity and angular velocity in the tire tangential direction on the basis of a transformation result produced by the linear transformation unit 251.

Furthermore, the processor 200 is provided with a second estimation unit 253 that estimates a velocity in a tire radial direction from estimated values for the velocity and angular velocity in the tire tangential direction.

Furthermore, the processor 200 is provided with a third estimation unit 254 that estimates a velocity in a $\theta$-angle direction corresponding to an angle of the strain sensor SN with respect to a ground contact surface of the tire 10, from estimated values for an acceleration and angular velocity in the tire tangential direction.

Furthermore, the processor 200 is provided with a fourth estimation unit 255 that estimates deflection of the tire 10 on the basis of the velocity and angular velocity in the tire tangential direction, the velocity in the tire radial direction, and the velocity in the $\theta$-angle direction.

In addition, the processor 200 is provided with a load prediction unit 256 that predicts a load applied to the tire 10 on the basis of the estimated deflection of the tire 10.

Note that the linear transformation unit 251, the first estimation unit 252, the second estimation unit 253, the third estimation unit 254, the fourth estimation unit 255, and the load prediction unit 256 can be realized by cooperation between the CPU 250, an OS (operating system) stored in the storage unit 203 or the like, and a prescribed application program.

Furthermore, the details of the processing and the like carried out by the linear transformation unit 251, the first estimation unit 252, the second estimation unit 253, the third estimation unit 254, the fourth estimation unit 255, and the load prediction unit 256 are described later.

(Tire load prediction processing)

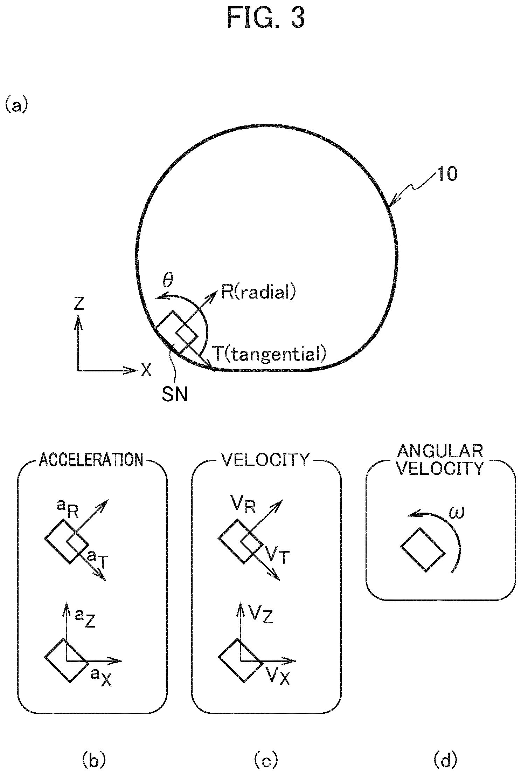

The processing procedure and so forth for the tire load prediction processing executed by the tire load prediction system S1 will be described with reference to FIGS. 3 to 15.

Prior to describing the processing procedure for the tire load prediction processing, a definition of a coordinate system used in the tire load prediction system S1 according to the present embodiment is illustrated in FIGS. 3(a) to (d).

Here, R is the radial direction (radial), and T is the tangential direction (tangential) or circumferential direction (circumferential).

Furthermore, the R, T coordinate system is an object coordinate system (local coordinate system) that is fixed on the strain sensor SN.

Meanwhile, x, z is a global coordinate system that is fixed in space. Furthermore, a represents acceleration, v represents velocity, and u represents displacement. In addition, $\omega$ represents the angular velocity of the strain sensor SN, and $\theta$ represents the angle of the strain sensor SN.

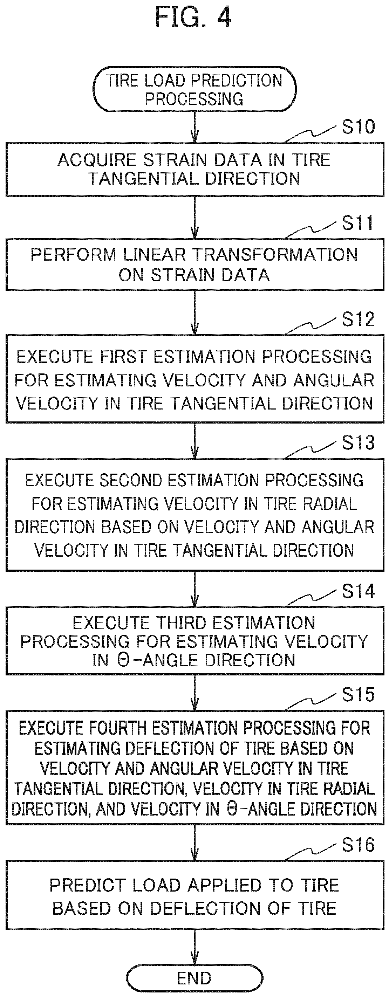

FIG. 4 is a flow chart illustrating a processing procedure for tire load prediction processing executed in the tire load prediction system S1.

When this processing is started, in step S10, strain data in the tire tangential direction is acquired, and the processing moves to step S11.

In step S11, a linear transformation is performed on the acquired strain data, and the processing moves to step S12.

In step S12, first estimation processing for estimating the velocity and angular velocity in the tire tangential direction is performed, and then the processing moves to step S13.

In step S13, second estimation processing for estimating the velocity in the tire radial direction on the basis of the velocity and angular velocity in the tire tangential direction is executed, and the processing moves to step S14.

In step S14, third estimation processing for estimating the velocity in the $\theta$-angle direction is executed, and the processing moves to step S15.

Fourth estimation processing for estimating deflection of the tire 10 on the basis of the velocity and angular velocity in the tire tangential direction, the velocity in the tire radial direction, and the velocity in the $\theta$-angle direction is executed, and the processing moves to step S16.

In step S16, the load applied to the tire 10 is predicted based on the deflection of the tire 10, and the processing ends.

(Method of estimating load using biaxial acceleration)

Here, a brief description will be given regarding a method of estimating load using biaxial acceleration for comparison.

First, physically, the calculation to follow the motion of an object (rigid body) in two dimensions and obtain the trajectory thereof has three degrees of freedom, and in order to estimate the load on a tire using biaxial acceleration, data of the three axes of the "R-direction", "T-direction", and "$\theta$-direction" is required.

Therefore, with the assumption that the trajectory within the tire is mostly a circular motion, the acceleration in two axial directions (R, T) was measured, the angular velocity was estimated by calculation, and then processing to obtain the trajectory was performed.

As a result of intensive research, the inventors of the present invention newly developed a method (algorithm) for how to estimate data in three axes ("R-direction", "T-direction", and "$\theta$-direction") from measurement data of one axis, in order to realize the processing mentioned above with the single-axis strain sensor SN.

(Method of predicting load in the present invention)

In the method of predicting load in the present invention, first, a linear transformation is performed on measured strain data, and values for T-direction velocity and angular velocity are estimated.

Next, R-direction acceleration is estimated from these two estimated values. Then, by subjecting the R-direction acceleration to integration to obtain R-direction velocity, data of the three axes of "R-direction velocity", "T-direction velocity", and "$\theta$-direction angular velocity" can be obtained. It then becomes possible to calculate the trajectory by using this data.

The details of the calculation method will be described below following the procedure.

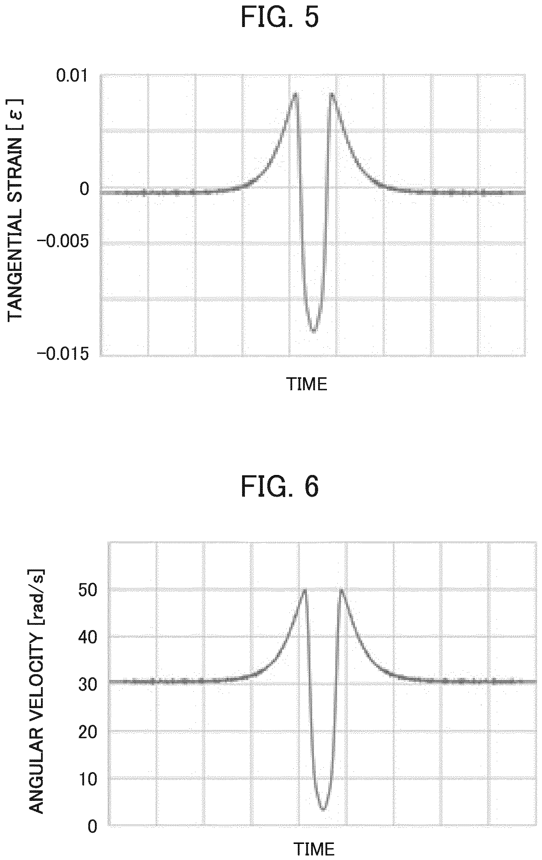

Note that here, for the convenience of the explanation, the sample data illustrated in FIG. 5 shall be used. This data was obtained by means of FEM analysis, and the tire type is "11R22.5M801".

Furthermore, this data is strain data at the tire inner surface as measured by the strain sensor SN, and is denoted as $\varepsilon(t)$ hereinafter.

[Estimation of angular velocity]

First, the process of calculating angular velocity from tangential-direction strain will be described.

The angular velocity is estimated by performing a linear transformation on the measured data using the following formula (equation 1).

[Equation 1]

$$\omega(t) = \omega_0 \left(a_1 \varepsilon(t) + 1\right)$$

Wherein, $\omega_0$ and $a_1$ are parameters representing the average angular velocity and an angular velocity multiplying factor, respectively.

Note that $\omega_0$ is obtained by means of the following formula (equation 2) using the one rotational time (ORT) obtained from the rotation cycle of the tire.

[Equation 2]

$$\omega_0 = \frac{2\pi}{ORT}$$

Furthermore, $a_1$ is determined by learning from experimental values and so forth, by trial and error, or the like. Note that a nonlinear transformation may be used.

A graph of the estimated angular velocity is illustrated as FIG. 6.

[Principle of estimating angular velocity]

In the tire 10, large bending deformation occurs in regions near the ground contact edge, and large compressive strain at the tire inner surface occurs.

Furthermore, it is thought that the curvature increases due to the large bending deformation, and that the angular velocity of the strain sensor SN itself increases.

Conversely, it is thought that, in the vicinity of directly below the axle, the bending deformation lessens, the compressive strain decreases (becomes a tensile force), and furthermore the curvature decreases, and as a result the angular velocity of the strain sensor SN itself also decreases.

Therefore, there is a correlation between the compressive strain and the angular velocity of the strain sensor SN, which is assumed here to be linear.

[Estimation of tangential-direction velocity]

Next, the process of calculating tangential-direction velocity from tangential-direction strain will be described.

The tangential-direction velocity is estimated by performing a linear transformation on the measured data using the following formula (equation 3).

[Equation 3]

$$v_T(t) = v_{T0}(a_2\,\varepsilon(t)+1)$$

Wherein, $v_{T0}$ and $a_2$ are parameters representing the average tangential-direction velocity and a tangential-direction velocity multiplying factor, respectively.

Note that $v_{T0}$ is obtained by means of the following formula (equation 4) using the one rotational time (ORT) obtained from the rotation cycle of the tire and the tire radius R.

[Equation 4]

$$v_{T0} = \frac{2\pi R}{ORT}$$

Furthermore, $a_2$ is determined by learning from experimental values and so forth, by trial and error, or the like. Note that a nonlinear transformation may be used.

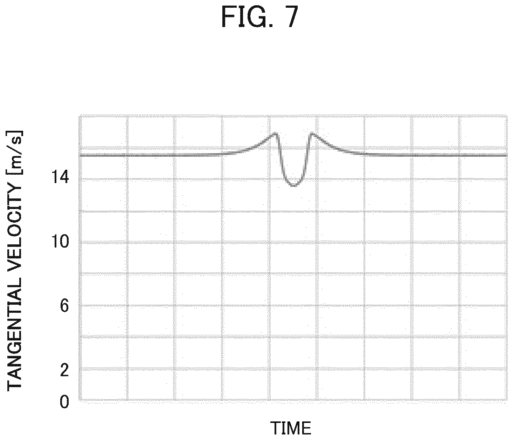

A graph of the estimated tangential-direction velocity is illustrated as FIG. 7.

[Principle of estimating tangential-direction velocity]

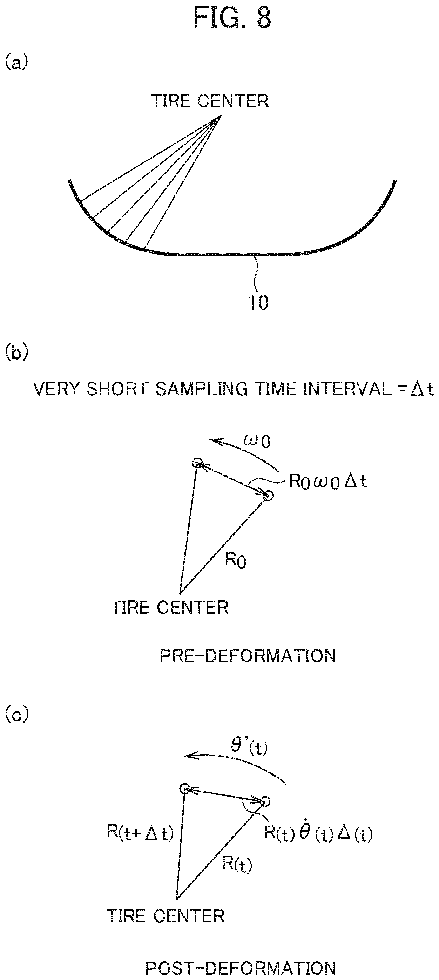

It is assumed that the rolling tire 10 is divided in terms of space for each very short sampling time interval $\Delta t$, as illustrated in FIG. 8(a).

Here, in the case of a pre-deformed state of the tire 10 (tire rotating in midair), a time-independent radius $R_0$ and an angular velocity $\omega_0$ are assumed, and the distance traveled in a very short time can be written as $R_0\omega_0\Delta t$ (see FIG. 8(b)).

On the other hand, when the tire 10 is in contact with the ground and deformation has occurred, the radius and angular velocity are functions of time and are expressed as $R(t)$ and $\theta'(t)$, respectively. Here, the distance traveled in a very short time can be written as $R(t)\theta'(t)\Delta t$ (see FIG. 8(c)).

Since the definition of strain is the extent to which expansion or contraction has occurred with respect to original length, the circumferential-direction strain of the tire 10 is expressed by the following formula (equation 5).

[Equation 5]

$$\varepsilon(t) = \frac{\Delta l}{l} = \frac{R_0 \omega_0 \Delta t - R(t)\theta'(t)\Delta t}{R_0 \omega_0 \Delta t} = \frac{R_0 \omega_0 - R(t)\theta'(t)}{R_0 \omega_0}$$

Here, assuming that the strain sensor SN is in circular motion, the tangential-direction velocity $v_T(t)$ can be written as the following formula (equation 6).

[Equation 6]

$$v_T(t) = R(t)\theta'(t)$$

Substituting this into the formula for $\varepsilon(t)$ of equation 6 obtains equation 7.

[Equation 7]

$$\varepsilon(t) = \frac{R_0 \omega_0 - v_T(t)}{R_0 \omega_0}$$

Here, since $R_0\omega_0$ is a time-independent fixed value, it can be seen that $v_T(t)$ and $\varepsilon(t)$ have a linear transformation relation.

[Estimation of radial-direction acceleration and velocity]

Assuming that the strain sensor SN is in circular motion, theoretically the estimation is performed by means of the calculation of the following formula (equation 8).

[Equation 8]

$$a_R(t) = v_T(t)\omega(t)$$

Furthermore, velocity in the radial direction is calculated by integrating the estimated value with respect to time using the following formula (equation 9).

[Equation 9]

$$v_R(t) = \int_0^t a_R(t)dt + v_{R0}$$

However, $a_R(t)$ may involve preprocessing such as centering in advance. Furthermore, the initial value of $v_{R0}$ is set to any value.

[Coordinate transformation]

Here, an estimated radial-direction velocity $v_R(t)$ and tangential-direction velocity $v_T(t)$ are transformed from the R, T coordinate system to the X, Z coordinate system using the estimated angular velocity $\omega(t)$.
First, the angular velocity w(t) is integrated and the angle $\theta(t)$ is calculated using the following formula (equation

10).

[Equation 10]

$$\theta(t) = \int_0^t \omega(s)ds + \theta_0$$

However, w(t) may sometimes be subjected to preprocessing such as an adjustment for the average to become $2\pi$. The initial value $\theta_0$ is set to an appropriate value such as 0 or $-\pi$.

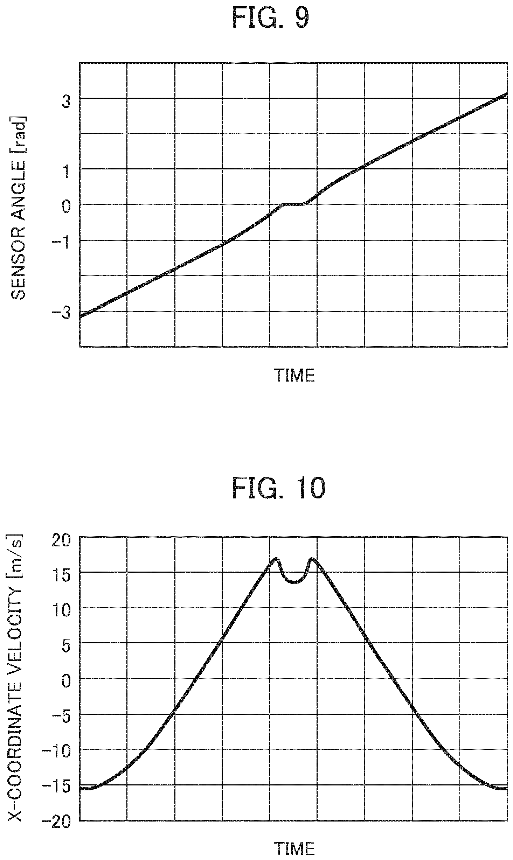

An example of the calculation result for the angle $\theta(t)$ is illustrated in the graph of FIG. 9.

Next, a coordinate transformation for velocity is performed.

A calculation from the object coordinate system (R, T) of the strain sensor SN to the global coordinate system (x, z) is performed using the following formula (equation 11).

[Equation 11]

$$v_x(t) = v_T(t)\cos\theta(t) - v_R(t)\sin\theta(t)$$
$$v_z(t) = v_T(t)\sin\theta(t) + v_T(t)\cos\theta(t)$$

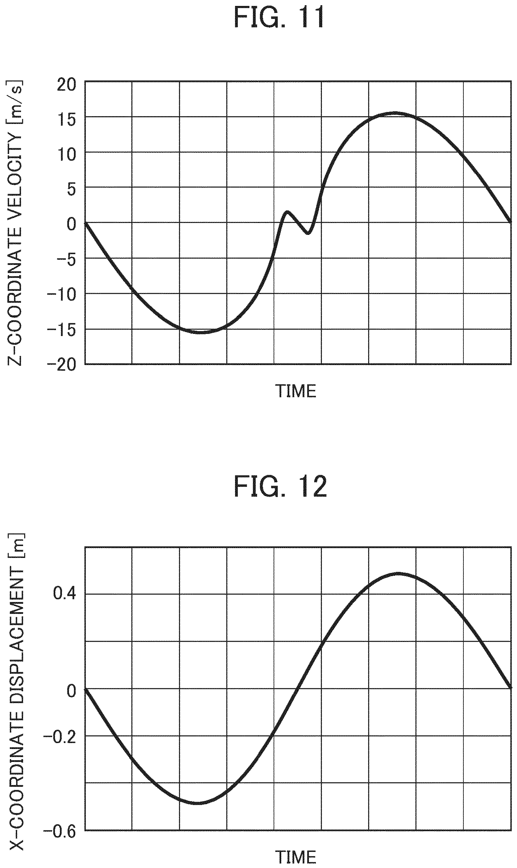

Examples of calculation results are illustrated in the graphs of FIGS. 10 and 11.

[Estimation of displacement]

The velocity is integrated and displacements $u_x(t)$ and $u_z(t)$ are calculated from the following formula (equation 12).

[Equation 12]

$$u_x(t) = \int_0^t v_x(s)ds + u_{x0}$$

$$u_z(t) = \int_0^t v_z(s)ds + u_{z0}$$

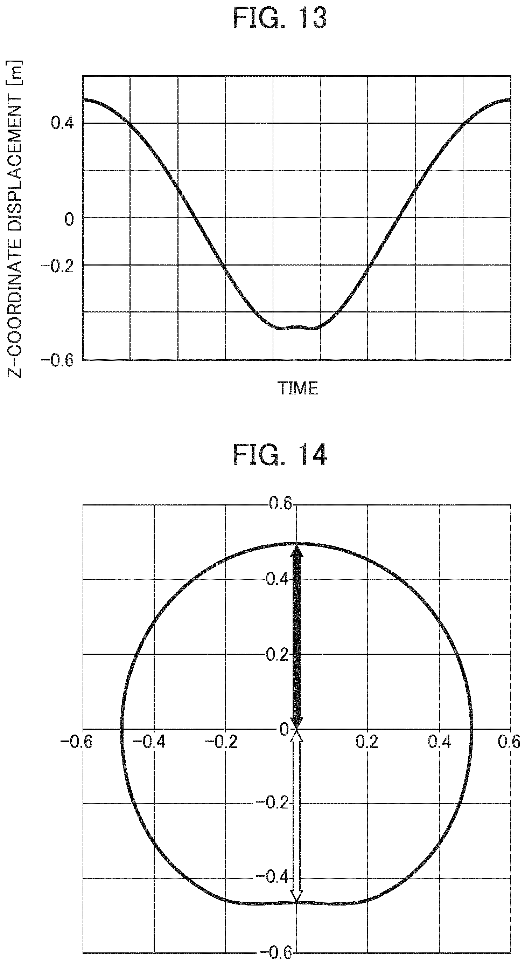

However, $v_x$ and $v_z$ may involve preprocessing such as centering. The initial values $u_{x0}$ and $u_{z0}$ can be set to any values. Examples of calculation results are illustrated in the graphs of FIGS. 12 and 13.

[Estimation of profile and deflection]

Then, when illustrated on a two-dimensional plane, the displacement $(u_x(t), u_z(t))$ excluding the time component becomes the trajectory illustrated in FIG. 14. A circle is fitted to this trajectory, and a regression radius $R_{fit}$ is obtained.

Furthermore, an effective radius $R_{eff}$ (for example, the minimum value from the center of the regression circle) in a state where the tire is deflected is obtained.

The deflection is then calculated using the following formula (equation 13).

[Equation 13]

$$d = R_{fit} - R_{eff}$$

Note that the feature value used for load prediction may be either of a deflection d and a deflection rate $d/R_{fit}$.

[Load prediction]

Next, the validity of a load calculation using deflection and the method therefor will be presented.

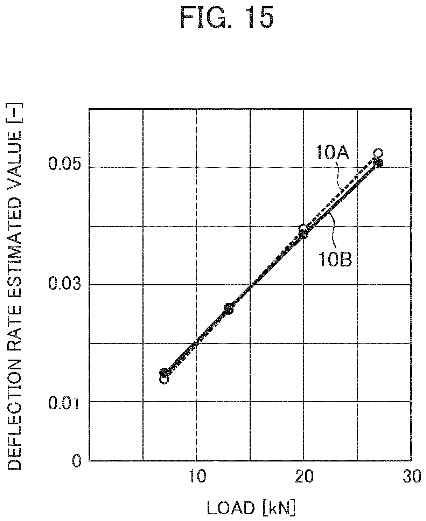

First, a relation between load and a deflection rate estimated value calculated using the algorithm in the present invention is illustrated in FIG. 15. Note that this data is an example in which an analysis was performed similarly using FEM.

Furthermore, in FIG. 15, the plot 10A indicates a tire with normal wear, and the plot 10B indicates a tire with uneven wear in the center.

In this way, a linear relation is obtained similar to the deflection obtained from the aforementioned axle height.

Furthermore, as illustrated in FIG. 15, it can be seen that plots 10A and 10B almost converge to a single line.

Wear dependence, which has been a disadvantage of CTR as previously mentioned, is not observed, and it is therefore possible to achieve greater accuracy in load prediction.

Furthermore, when actually performing load prediction, the load is calculated using the following formula (equation 14).

[Equation 14]

$$(Load) = f(Deflection, Temperature, Pressure, etc)$$

Note that, in addition to deflection information, TPMS information, wear information, and the like can be used as explanatory variables, and the operation can be carried out with machine learning being performed to identify parameters in advance.

Furthermore, although linear multiple regression is basically sufficient, a nonlinear model may be used.

As described above, with the tire load prediction system S1 according to the present embodiment, it is possible to increase the accuracy of load prediction, and it is possible to perform load prediction even for vehicles that mainly travel at low speeds.

Furthermore, by using the strain sensor SN, deflection and load of a tire can be predicted regardless of the wear condition of the tire.

Furthermore, for example, if operating conditions of the power supply (battery) 102 and so forth are satisfied, some of the processing functions of the processor 200 in the present embodiment may be mounted in the sensor unit SU.

**EXPLANATION OF THE REFERENCE NUMERALS**

S1   Tire load prediction system
SU   Sensor unit
SN   Strain sensor
10   Pneumatic tire (tire)
200   Processor
202   Data acquisition unit
203   Storage unit
250   CPU
251   Linear transformation unit
252   First estimation unit
253   Second estimation unit
254   Third estimation unit
255   Fourth estimation unit
256   Load prediction unit

**Claims**

1. A tire load prediction system (S1) comprising:

   a sensor unit (SU) that is provided inside a tire (10) and has a strain sensor (SN) that detects strain of the tire;
   a strain data acquisition unit (202) that acquires strain data in a tire tangential direction that is output from the sensor unit; characterized that the system comprises:

   a linear transformation unit (251) that performs a linear transformation on the acquired strain data;
   a first estimation unit (252) that estimates a velocity and angular velocity in the tire tangential direction on the basis of a transformation result produced by the linear transformation unit;
   a second estimation unit (253) that estimates a velocity in a tire radial direction from estimated values for the velocity and angular velocity in the tire tangential direction;
   a third estimation unit (254) that estimates a velocity in a $\theta$-angle direction corresponding to an angle of the strain sensor with respect to a ground contact surface of the tire, from estimated values for an acceleration and angular velocity in the tire tangential direction;
   a fourth estimation unit (255) that estimates deflection of the tire on the basis of the velocity and angular velocity in the tire tangential direction, the velocity in the tire radial direction, and the velocity in the $\theta$-angle direction; and
   a load prediction unit (256) that predicts a load applied to the tire on the basis of the estimated deflection of the tire.

2. The tire load prediction system according to claim 1, wherein
   the fourth estimation unit estimates a deformation profile of the tire on the basis of the velocity in the tire tangential direction, the velocity in the tire radial direction, and the velocity in the $\theta$-angle direction, and extracts a feature value corresponding to the deflection of the tire to estimate the deflection of the tire.

3. The tire load prediction system according to claim 1, wherein

   the linear transformation unit performs a linear transformation on the strain data using the following formula.

   [Equation 1]

   $$\omega(t) = \omega_0 (a_1 \varepsilon(t)+1)$$

   Wherein, $\omega_0$: average angular velocity, $a_1$: angular velocity multiplying factor, $\varepsilon$: strain

4. The tire load prediction system according to claim 1, wherein

   the first estimation unit estimates tangential-direction velocity by performing a linear transformation for the acquired data using the following formula.

   [Equation 3]

   $$v_T(t) = v_{T0} (a_2 \varepsilon(t)+1)$$

   Wherein, $v_{T0}$: average tangential-direction velocity, $a_2$: tangential-direction velocity multiplying factor

5. A tire load prediction program executed by a CPU provided in a tire load prediction system (S1) according to one of the claims 1 to 4 for executing the method according to one of the claims 7 or 8, the program comprising:
   a strain data acquisition step (S10) of acquiring strain data in a tire tangential direction that is output from a strain sensor provided on an inner side surface of a tire or inside the tire; the program being characterized that comprises:

   a linear transformation step (S11) of performing a linear transformation on the acquired strain data;
   a first estimation step (S12) of estimating a velocity and angular velocity in the tire tangential direction on the basis of a transformation result;
   a second estimation step (S13) of estimating a velocity in a tire radial direction on the basis of estimated values for the velocity and angular velocity in the tire tangential direction;
a third estimation step (S14) of estimating a velocity in a θ-angle direction corresponding to an angle of the strain sensor with respect to a ground contact surface of the tire, on the basis of estimated values for an acceleration and angular velocity in the tire tangential direction;
a fourth estimation step (S15) of estimating deflection of the tire on the basis of the velocity and angular velocity in the tire tangential direction, the velocity in the tire radial direction, and the velocity in the θ-angle direction; and
a load prediction step (S16) of predicting a load applied to the tire on the basis of the estimated deflection of the tire.

6. The tire load prediction program according to claim 5, wherein
in the fourth estimation step, a deformation profile of the tire is estimated based on the velocity in the tire tangential direction, the velocity in the tire radial direction, and the velocity in the θ-angle direction, and a feature value corresponding to the deflection of the tire is extracted to estimate the deflection of the tire.

7. A tire load prediction method comprising:
a strain data acquisition process (S10) of acquiring strain data in a tire tangential direction that is output from a strain sensor provided on an inner side surface of a tire or inside the tire; the method being characterized that comprises:

a linear transformation process (S11) of performing a linear transformation on the acquired strain data;
a first estimation process (S12) of estimating a velocity and angular velocity in the tire tangential direction on the basis of a transformation result;
a second estimation process (S13) of estimating a velocity in a tire radial direction on the basis of estimated values for the velocity and angular velocity in the tire tangential direction;
a third estimation process (S14) of estimating a velocity in a θ-angle direction corresponding to an angle of the strain sensor with respect to a ground contact surface of the tire, on the basis of estimated values for an acceleration and angular velocity in the tire tangential direction;
a fourth estimation process (S15) of estimating deflection of the tire on the basis of the velocity and angular velocity in the tire tangential direction, the velocity in the tire radial direction, and the velocity in the θ-angle direction; and
a load prediction process (S16) of predicting a load applied to the tire on the basis of the estimated deflection of the tire.

8. The tire load prediction method according to claim 7, wherein
in the fourth estimation process, a deformation profile of the tire is estimated based on the velocity in the tire tangential direction, the velocity in the tire radial direction, and the velocity in the θ-angle direction, and a feature value corresponding to the deflection of the tire is extracted to estimate the deflection of the tire.

**Patentansprüche**

1. Reifenlast-Vorhersagesystem (S1), das Folgendes umfasst:

eine Sensoreinheit (SU), die innerhalb eines Reifens (10) bereitgestellt wird und einen Dehnungssensor (SN) aufweist, der eine Dehnung des Reifens ermittelt,
eine Dehnungsdaten-Erfassungseinheit (202), die Dehnungsdaten in einer Reifentangentialrichtung erfasst, die von der Sensoreinheit ausgegeben werden, **dadurch gekennzeichnet, dass** das System Folgendes umfasst:

eine Lineartransformationseinheit (251), die eine lineare Transformation an den erfassten Dehnungsdaten durchführt,
eine erste Abschätzungseinheit (252), die eine Geschwindigkeit und eine Winkelgeschwindigkeit in der Reifentangentialrichtung auf der Grundlage eines durch die Lineartransformationseinheit erzeugten Transformationsergebnisses abschätzt,
eine zweite Abschätzungseinheit (253), die eine Geschwindigkeit in einer Reifenradialrichtung aus abgeschätzten Werten für die Geschwindigkeit und die Winkelgeschwindigkeit in der Reifentangentialrichtung abschätzt,
eine dritte Abschätzungseinheit (254), die eine Geschwindigkeit in einer θ-Winkelrichtung, die einem Winkel des Dehnungssensors in Bezug auf eine Bodenkontaktfläche des Reifens entspricht, aus abgeschätzten Werten für eine Beschleunigung und eine Winkelgeschwindigkeit in der Reifentangentialrichtung abschätzt,

eine vierte Abschätzungseinheit (255), die eine Einfederung des Reifens auf der Grundlage der Geschwindigkeit und der Winkelgeschwindigkeit in der Reifentangentialrichtung, der Geschwindigkeit in der Reifenradialrichtung und der Geschwindigkeit in der θ-Winkelrichtung abschätzt, und

eine Lastvorhersageeinheit (256), die eine auf den Reifen ausgeübte Last auf der Grundlage der abgeschätzten Einfederung des Reifens vorhersagt.

2.  Reifenlast-Vorhersagesystem nach Anspruch 1, wobei
die vierte Abschätzungseinheit ein Verformungsprofil des Reifens auf der Grundlage der Geschwindigkeit in der Reifentangentialrichtung, der Geschwindigkeit in der Reifenradialrichtung und der Geschwindigkeit in der θ-Winkelrichtung abschätzt, und einen Merkmalswert, welcher der Einfederung des Reifens entspricht, extrahiert, um die Einfederung des Reifens abzuschätzen.

3.  Reifenlast-Vorhersagesystem nach Anspruch 1, wobei

die Lineartransformationseinheit eine lineare Transformation an den Dehnungsdaten unter Verwendung der folgenden Formel durchführt:

[Gleichung 1]

$$\omega(t) = \omega_0(a_1\varepsilon(t) + 1),$$

wobei $\omega_0$: durchschnittliche Winkelgeschwindigkeit, $a_1$: Winkelgeschwindigkeit-Multiplikationsfaktor, $\varepsilon$: Dehnung.

4.  Reifenlast-Vorhersagesystem nach Anspruch 1, wobei

die erste Abschätzungseinheit eine Tangentialrichtungsgeschwindigkeit durch Durchführen einer linearen Transformation für die erfassten Daten unter Verwendung der folgenden Formel abschätzt:

[Gleichung 2]

$$v_T(t) = v_{T0}(a_2\varepsilon(t) + 1),$$

wobei $v_{T0}$: durchschnittliche Tangentialrichtungsgeschwindigkeit, $a_2$: Tangentialrichtungsgeschwindigkeit-Multiplikationsfaktor.

5.  Reifenlast-Vorhersageprogramm, das durch eine ZE ausgeführt wird, die in einem Reifenlast-Vorhersagesystem (S1) nach einem der Ansprüche 1 bis 4 bereitgestellt wird, zum Ausführen des Verfahrens nach einem der Ansprüche 7 oder 8, wobei das Programm Folgendes umfasst:
einen Dehnungsdaten-Erfassungsschritt (S10) des Erfassens von Dehnungsdaten in einer Reifentangentialrichtung, die von einem Dehnungssensor ausgegeben werden, der auf einer Innenseitenfläche eines Reifens oder innerhalb des Reifens bereitgestellt wird, wobei das Programm **dadurch gekennzeichnet ist, dass** es Folgendes umfasst:

einen Lineartransformationsschritt (S11) des Durchführens einer linearen Transformation an den erfassten Dehnungsdaten,
einen ersten Abschätzungsschritt (S12) des Abschätzens einer Geschwindigkeit und einer Winkelgeschwindigkeit in der Reifentangentialrichtung auf der Grundlage eines Transformationsergebnisses,
einen zweiten Abschätzungsschritt (S13) des Abschätzens einer Geschwindigkeit in einer Reifenradialrichtung auf der Grundlage von abgeschätzten Werten für die Geschwindigkeit und die Winkelgeschwindigkeit in der Reifentangentialrichtung,
einen dritten Abschätzungsschritt (S14) des Abschätzens einer Geschwindigkeit in einer θ-Winkelrichtung, die einem Winkel des Dehnungssensors in Bezug auf eine Bodenkontaktfläche des Reifens entspricht, auf der Grundlage von abgeschätzten Werten für eine Beschleunigung und eine Winkelgeschwindigkeit in der Reifentangentialrichtung,
einen vierten Abschätzungsschritt (S15) des Abschätzens einer Einfederung des Reifens auf der Grundlage der Geschwindigkeit und der Winkelgeschwindigkeit in der Reifentangentialrichtung, der Geschwindigkeit in der Reifenradialrichtung und der Geschwindigkeit in der θ-Winkelrichtung, und
einen Lastvorhersageschritt (S16) des Vorhersagens einer auf den Reifen ausgeübten Last auf der Grundlage der abgeschätzten Einfederung des Reifens.

6. Reifenlast-Vorhersageprogramm nach Anspruch 5, wobei
in dem vierten Abschätzungsschritt ein Verformungsprofil des Reifens auf der Grundlage der Geschwindigkeit in der Reifentangentialrichtung, der Geschwindigkeit in der Reifenradialrichtung und der Geschwindigkeit in der θ-Winkelrichtung abgeschätzt wird, und ein Merkmalswert, welcher der Einfederung des Reifens entspricht, extrahiert wird, um die Einfederung des Reifens abzuschätzen.

7. Reifenlast-Vorhersageverfahren, das Folgendes umfasst:
einen Dehnungsdaten-Erfassungsprozess (S10) des Erfassens von Dehnungsdaten in einer Reifentangentialrichtung, die von einem Dehnungssensor ausgegeben werden, der auf einer Innenseitenfläche eines Reifens oder innerhalb des Reifens bereitgestellt wird, wobei das Verfahren **dadurch gekennzeichnet ist, dass** es Folgendes umfasst:

einen Lineartransformationsprozess (S11) des Durchführens einer linearen Transformation an den erfassten Dehnungsdaten,
einen ersten Abschätzungsprozess (S12) des Abschätzens einer Geschwindigkeit und einer Winkelgeschwindigkeit in der Reifentangentialrichtung auf der Grundlage eines Transformationsergebnisses,
einen zweiten Abschätzungsprozess (S13) des Abschätzens einer Geschwindigkeit in einer Reifenradialrichtung auf der Grundlage von abgeschätzten Werten für die Geschwindigkeit und die Winkelgeschwindigkeit in der Reifentangentialrichtung,
einen dritten Abschätzungsprozess (S14) des Abschätzens einer Geschwindigkeit in einer θ-Winkelrichtung, die einem Winkel des Dehnungssensors in Bezug auf eine Bodenkontaktfläche des Reifens entspricht, auf der Grundlage von abgeschätzten Werten für eine Beschleunigung und eine Winkelgeschwindigkeit in der Reifentangentialrichtung,
einen vierten Abschätzungsprozess (S15) des Abschätzens einer Einfederung des Reifens auf der Grundlage der Geschwindigkeit und der Winkelgeschwindigkeit in der Reifentangentialrichtung, der Geschwindigkeit in der Reifenradialrichtung und der Geschwindigkeit in der θ-Winkelrichtung, und
einen Lastvorhersageprozess (S16) des Vorhersagens einer auf den Reifen ausgeübten Last auf der Grundlage der abgeschätzten Einfederung des Reifens.

8. Reifenlast-Vorhersageverfahren nach Anspruch 7, wobei
in dem vierten Abschätzungsprozess ein Verformungsprofil des Reifens auf der Grundlage der Geschwindigkeit in der Reifentangentialrichtung, der Geschwindigkeit in der Reifenradialrichtung und der Geschwindigkeit in der θ-Winkelrichtung abgeschätzt wird, und ein Merkmalswert, welcher der Einfederung des Reifens entspricht, extrahiert wird, um die Einfederung des Reifens abzuschätzen.

**Revendications**

1. Système de prédiction de charge d'un pneumatique (S1), comprenant :

une unité de capteur (SU) qui est fournie à l'intérieur d'un pneumatique (10) et comporte un capteur de allongement (SN) qui détecte un allongement du pneumatique ;
une unité d'acquisition de données d'allongement (202) qui acquiert des données d'allongement dans une direction tangentielle du pneumatique, qui sont émises par l'unité de détection ; **caractérisé en ce que** le système comprend :

une unité de transformation linéaire (251) qui réalise une transformation linéaire sur les données d'allongement acquises ;
une première unité d'estimation (252) qui estime une vitesse et une vitesse angulaire dans la direction tangentielle du pneumatique, sur la base d'un résultat de transformation produit par l'unité de transformation linéaire ;
une deuxième unité d'estimation (253) qui estime une vitesse dans une direction radiale du pneumatique sur la base de valeurs estimées pour la vitesse et la vitesse angulaire dans la direction tangentielle du pneumatique ;
une troisième unité d'estimation (254) qui estime une vitesse dans une direction d'un angle θ correspondant à un angle du capteur d'allongement par rapport à une surface de contact au sol du pneumatique, à partir de valeurs estimées pour une accélération et une vitesse angulaire dans la direction tangentielle du pneumatique ;

une quatrième unité d'estimation (255) qui estime une déflexion du pneumatique sur la base de la vitesse et de la vitesse angulaire dans la direction tangentielle du pneumatique, de la vitesse dans la direction radiale du pneumatique et de la vitesse dans la direction de l'angle θ ; et

une unité de prédiction de charge (256) qui prédit une charge appliquée au pneumatique sur la base de la déflexion estimée du pneumatique.

2. Système de prédiction de charge d'un pneumatique selon la revendication **1,** dans lequel
la quatrième unité d'estimation estime un profil de déformation du pneumatique sur la base de la vitesse dans la direction tangentielle du pneumatique, de la vitesse dans la direction radiale du pneumatique, et de la vitesse dans la direction de l'angle θ, et extrait une valeur caractéristique correspondant à la déflexion du pneumatique pour estimer la déflexion du pneumatique.

3. Système de prédiction de charge d'un pneumatique selon la revendication **1,** dans lequel

l'unité de transformation linéaire réalise une transformation linéaire sur les données d'allongement en utilisant la formule suivante :

[Equation 1]
$$\omega(t) = \omega_0(a_1\varepsilon(t) + 1),$$

dans laquelle, $\omega_0$ : vitesse angulaire moyenne, $a_1$ : facteur de multiplication de vitesse angulaire, $\varepsilon$ : allongement.

4. Système de prédiction de charge d'un pneumatique selon la revendication 1, dans lequel

la première unité d'estimation estime une vitesse dans la direction tangentielle en réalisant une transformation linéaire pour les données acquises en utilisant la formule suivante :

[Equation 2]
$$v_T(t) = v_{T0}(a_2\varepsilon(t) + 1),$$

dans laquelle, $v_{T0}$ : vitesse moyenne dans la direction tangentielle, $a_2$ = facteur de multiplication de vitesse dans la direction tangentielle.

5. Programme de prédiction de charge d'un pneumatique exécuté par une unité de traitement centrale fournie dans un système de prédiction de charge du pneumatique (S1) selon l'une des revendications 1 à 4 pour exécuter le procédé selon l'une des revendications 7 ou 8, le programme comprenant :
une étape d'acquisition de données d'allongement (S10) consistant à acquérir des données d'allongement dans une direction tangentielle du pneumatique, qui sont émises par un capteur d'allongement fourni sur une surface latérale interne d'un pneumatique ou à l'intérieur du pneumatique ; le programme étant **caractérisé en ce qu'**il comprend :

une étape de transformation linéaire (S11) consistant à réaliser une transformation linéaire sur les données d'allongement acquises ;
une première étape d'estimation (S12) consistant à estimer une vitesse et une vitesse angulaire dans la direction tangentielle du pneumatique sur la base du résultat de transformation ;
une deuxième étape d'estimation (S13) consistant à estimer une vitesse dans une direction radiale du pneumatique sur la base de valeurs estimées pour la vitesse et la vitesse angulaire dans la direction tangentielle du pneumatique ;
une troisième étape d'estimation (S14) consistant à estimer une vitesse dans une direction de l'angle θ correspondant à un angle du capteur d'allongement par rapport à une surface de contact au sol du pneumatique, sur la base de valeurs estimées pour une accélération et une vitesse angulaire dans la direction tangentielle du pneumatique ;
une quatrième étape d'estimation (S15) consistant à estimer une déflexion du pneumatique sur la base de la vitesse et de la vitesse angulaire dans la direction tangentielle du pneumatique, de la vitesse dans la direction radiale du pneumatique et de la vitesse dans la direction de l'angle θ ; et

une étape de prédiction de charge (S16) consistant à prédire une charge appliquée au pneumatique sur la base de la déflexion estimée du pneumatique.

6. Programme de prédiction de charge d'un pneumatique selon la revendication 5, dans lequel
lors de la quatrième étape d'estimation, un profil de déformation du pneumatique est estimé sur la base de la vitesse dans la direction tangentielle du pneumatique, de la vitesse dans la direction radiale du pneumatique et de la vitesse dans la direction de l'angle θ, et une valeur caractéristique correspondant à la déflexion du pneumatique est extraite pour estimer la déflexion du pneumatique.

7. Procédé de prédiction de charge d'un pneumatique, comprenant :
un processus d'acquisition de données d'allongement (S10) consistant à acquérir des données d'allongement dans une direction tangentielle du pneumatique qui sont émises par un capteur d'allongement fourni sur une surface latérale interne d'un pneumatique ou à l'intérieur du pneumatique ; le procédé étant **caractérisé en ce qu'**il comprend :

un processus de transformation linéaire (S11) consistant à réaliser une transformation linéaire sur les données d'allongement acquises ;
un premier processus d'estimation (S12) consistant à estimer une vitesse et une vitesse angulaire dans la direction tangentielle du pneumatique sur la base d'un résultat de transformation ;
un deuxième processus d'estimation (S13) consistant à estimer une vitesse dans une direction radiale du pneumatique sur la base de valeurs estimées pour la vitesse et la vitesse angulaire dans la direction tangentielle du pneumatique ;
un troisième processus d'estimation (S14) consistant à estimer une vitesse dans une direction de l'angle θ correspondant à un angle du capteur d'allongement par rapport à une surface de contact au sol du pneumatique, sur la base de valeurs estimées pour une accélération et une vitesse angulaire dans la direction tangentielle du pneumatique ;
un quatrième processus d'estimation (S15) consistant à estimer une déflexion du pneumatique sur la base de la vitesse et de la vitesse angulaire dans la direction tangentielle du pneumatique, de la vitesse dans la direction radiale du pneumatique et de la vitesse dans la direction de l'angle θ ; et
un processus de prédiction de charge (S16) consistant à prédire une charge appliquée au pneumatique sur la base de la déflexion estimée du pneumatique.

8. Procédé de prédiction de charge d'un pneumatique selon la revendication 7, dans lequel
dans le quatrième processus d'estimation, un profil de déformation du pneumatique est estimé sur la base de la vitesse dans la direction tangentielle du pneumatique, de la vitesse dans la direction radiale du pneumatique et de la vitesse dans la direction de l'angle θ, et une valeur caractéristique correspondant à la déflexion du pneumatique est extraite pour estimer la déflexion du pneumatique.

## FIG. 1

# FIG. 2

# FIG. 3

(a)

(b) ACCELERATION

(c) VELOCITY

(d) ANGULAR VELOCITY

# FIG. 4

```
┌─────────────────────────┐
│  TIRE LOAD PREDICTION   │
│       PROCESSING        │
└─────────────────────────┘
              │
              ▼           ~ S10
┌─────────────────────────────────┐
│   ACQUIRE STRAIN DATA IN TIRE   │
│     TANGENTIAL DIRECTION        │
└─────────────────────────────────┘
              │
              ▼           ~ S11
┌─────────────────────────────────┐
│  PERFORM LINEAR TRANSFORMATION  │
│        ON STRAIN DATA           │
└─────────────────────────────────┘
              │
              ▼           ~ S12
┌─────────────────────────────────┐
│ EXECUTE FIRST ESTIMATION PROCESSING │
│ FOR ESTIMATING VELOCITY AND ANGULAR │
│ VELOCITY IN TIRE TANGENTIAL DIRECTION │
└─────────────────────────────────┘
              │
              ▼           ~ S13
┌─────────────────────────────────┐
│ EXECUTE SECOND ESTIMATION PROCESSING │
│  FOR ESTIMATING VELOCITY IN TIRE RADIAL │
│ DIRECTION BASED ON VELOCITY AND ANGULAR │
│ VELOCITY IN TIRE TANGENTIAL DIRECTION │
└─────────────────────────────────┘
              │
              ▼           ~ S14
┌─────────────────────────────────┐
│    EXECUTE THIRD ESTIMATION     │
│ PROCESSING FOR ESTIMATING VELOCITY │
│     IN Θ-ANGLE DIRECTION        │
└─────────────────────────────────┘
              │
              ▼           ~ S15
┌─────────────────────────────────┐
│ EXECUTE FOURTH ESTIMATION PROCESSING FOR │
│  ESTIMATING DEFLECTION OF TIRE BASED ON │
│   VELOCITY AND ANGULAR VELOCITY IN TIRE │
│ TANGENTIAL DIRECTION, VELOCITY IN TIRE RADIAL │
│ DIRECTION, AND VELOCITY IN Θ-ANGLE DIRECTION │
└─────────────────────────────────┘
              │
              ▼           ~ S16
┌─────────────────────────────────┐
│   PREDICT LOAD APPLIED TO TIRE  │
│   BASED ON DEFLECTION OF TIRE   │
└─────────────────────────────────┘
              │
              ▼
         ┌─────────┐
         │   END   │
         └─────────┘
```

## FIG. 5

## FIG. 6

# FIG. 7

# FIG. 8

(a)

TIRE CENTER

10

(b)

VERY SHORT SAMPLING TIME INTERVAL $= \Delta t$

$\omega_0$

$R_0 \omega_0 \Delta t$

$R_0$

TIRE CENTER

PRE-DEFORMATION

(c)

$\theta'(t)$

$R(t+\Delta t)$

$R(t) \dot{\theta}(t) \Delta(t)$

$R(t)$

TIRE CENTER

POST-DEFORMATION

# FIG. 9

# FIG. 10

## FIG. 11

## FIG. 12

# FIG. 13

# FIG. 14

# FIG. 15

**EP 4 246 112 B1**

**REFERENCES CITED IN THE DESCRIPTION**

**Patent documents cited in the description**

- EP 3428597 A1

- US 2010063671 A1